Europäisches Patentamt

European Patent Office

Office européen des brevets

(11) Veröffentlichungsnummer: **0 319 611 B1**

# EUROPÄISCHE PATENTSCHRIFT

(45) Veröffentlichungstag der Patentschrift: **21.08.91**

(51) Int. Cl.⁵: **B23Q 3/157**, B23Q 13/00

(21) Anmeldenummer: **87118389.3**

(22) Anmeldetag: **11.12.87**

(54) **Werkzeugmaschine, insbesondere NC-Bearbeitungszentrum.**

(43) Veröffentlichungstag der Anmeldung:
**14.06.89 Patentblatt 89/24**

(45) Bekanntmachung des Hinweises auf die
Patenterteilung:
**21.08.91 Patentblatt 91/34**

(84) Benannte Vertragsstaaten:
**CH DE FR GB IT LI SE**

(56) Entgegenhaltungen:
**DE-A- 2 426 063**
**DE-U- 8 520 123**
**US-A- 3 893 227**
**US-A- 4 196 506**

(73) Patentinhaber: **Burkhardt + Weber GmbH**
**Burkhardt + Weber Strasse 57**
**W-7410 Reutlingen(DE)**

(72) Erfinder: **Raiser, Ernst**
**Feldbergstrasse 5**
**W-7410 Reutlingen(DE)**
Erfinder: **Kimmig, Manfred**
**Ulmenstrasse 7**
**W-7402 Kirchentellingsfurt(DE)**

(74) Vertreter: **Patentanwälte Phys. Bartels**
**Dipl.-Ing. Fink Dr.-Ing. Held**
**Lange Strasse 51**
**W-7000 Stuttgart 1(DE)**

## Beschreibung

Die Erfindung betrifft eine Werkzeugmaschine, insbesondere ein NC-Bearbeitungszentrum, die die Merkmale des Oberbegriffs des Anspruches 1 aufweist.

Werkzeugmaschinen mit einer Werkzeugwechselvorrichtung, die in Zusammenwirkung mit einem Werkzeugmagazin einen selbsttätigen Austausch von Werkzeugen ermöglicht, welche für die spanende Bearbeitung von Werkstücken eingesetzt werden sollen, sind in mannigfachen Ausführungsformen bekannt. So zeigt beispielsweise die US-A-4 196 506 ein Bearbeitungszentrum mit einem Werkzeugwechselgreifer gemäß dem Oberbegriff des Anspruchs 1 zum Ausheben und Einsetzen der Werkzeuge aus der bzw. in die Werkzeugaufnahme der Maschinenspindel. Der Werkzeugwechselgreifer wirkt hier mit einem Werkzeugtransportwagen zusammen, der eine Werkzeughalterung besitzt und zwischen zwei Positionen bewegbar geführt ist, nämlich einer dem Werkzeugwechselgreifer benachbarten Übergabeposition und einer dem Werkzeugmagazin benachbarten Position, in der die Werkzeughalterung auf eine Entlade/Ladestation des Werkzeugmagazins ausgerichtet ist. Die Werkzeughalterung im Werkzeugtransportwagen ist so ausgebildet, daß die Werkzeuge zusammen mit einer auf den Werkzeugschaft aufgeschobenen Werkzeug-Schutzhülse in der Halterung aufnehmbar sind. Eine mit der Schutzhülse zusammenwirkende steuerbare Riegeleinrichtung der Werkzeughalterung ist zwischen einem Sperrzustand, bei dem die Schutzhülse in der Halterung formschlüssig verriegelt ist, und einem Freigabezustand umsteuerbar, bei dem die Schutzhülse freigegeben ist, so daß die Werkzeuge vom Werkzeugtransportwagen zusammen mit ihrer Schutzhülse an das Werkzeugmagazin übergebbar sind. Bei dem aus der genannten US-A-4 196 506 bekannten Bearbeitungszentrum ist die Verwendung eines Werkzeugmagazins mit beweglichen Speicherplätzen zwingend erforderlich, um ausgewählte Speicherplätze in die Entlade/Ladestation bewegen zu können, so daß der Transport betreffender Werkzeuge mittels des Werkzeugtransportwagens zwischen Werkzeugwechselgreifer und Werkzeugmagazin in gewünschter Weise stattfinden kann. Daher ist bei derartigen Maschinen eine Verwendung von Werkzeugmagazinen großer Aufnahmekapazität, nämlich von stationären Werkzeugmagazinen mit unbeweglich angeordneten Speicherplätzen, nicht möglich.

Die DE-Gebrauchsmusterschrift 85 20 123 zeigt eine Werkzeugmaschine der eingangs genannten Art in Form eines NC-Bearbeitungszentrums, dessen Werkzeugwechselvorrichtung demgegenüber die Zusammenwirkung mit einem sog. Gestellmagazin ermöglicht, also einem Magazin, in dem die Werkzeuge in ortsfesten vertikalen Reihen untergebracht sind und das mit beliebig großer Aufnahmekapazität ausgebildet sein kann. Die Werkzeuge, die mit Steilkegelschäften versehen sind, sitzen in U-förmigen Aufnahmeschlitzen, die in vertikalen Gestellblechen ausgespart sind, welche, Gestellreihen bildend, in der Nähe der Vorderseite des Gestellmagazins im Abstand nebeneinander angeordnet sind. Die Aufnahmeschlitze verlaufen schräg nach aufwärts geneigt. sodaß das innere Ende der Schlitze tiefer gelegen ist als ihre Schlitzmündung, durch die hindurch die Werkzeuge in den Aufnahmeschlitz eingesteckt werden. Die Werkzeuge werden auf diese Weise durch ihre Gewichtskraft sicher gehalten, sodaß sie auch durch Erschütterungen nicht aus den Aufnahmeschlitzen herausfallen können.

Bei Werkzeugmaschinen unmittelbar zugeordneten Werkzeugmagazinen, seien es Gestellmagazine der erwähnten Art oder auch andere Magazine bekannter Bauarten, etwa Trommel- oder Scheibenmagazine, sind die Werkzeuge den in der Nähe des Arbeitsbereichs der zugeordneten Maschine herrschenden Umgebungseinflüssen ausgesetzt. Die dabei auftretenden Spritzer und Nebel aus ölhaltigen und schneidmittelhaltigen Emulsionen führen zur Bildung von angelagerten Schichten auf den Werkzeugen, insbesondere dann, wenn es sich um Werkzeuge mit längerer Verweildauer im Magazin handelt. Selbst wenn derartige schichtartige Anlagerungen nur sehr dünn sind, kommt es zu Beeinträchtigungen der Poßflächen am Steilkegelschaft der Werkzeuge und dadurch zu Rundlauffehlern der betreffenden Werkzeuge in der Maschinenspindel. Hinzu kommt die Gefahr des Anhaftens von umherfliegenden Spänen an den Werkzeugen.

Der Erfindung liegt die Aufgabe zugrunde, diese Unzulänglichkeiten durch Schaffung einer Werkzeugmaschine zu vermeiden, bei der eine Beeinträchtigung von Paßflächen der im Magazin befindlichen Werkzeuge durch Umgebungseinflüsse vermieden ist, auch wenn es sich um Magazine einer offenen Bauart, beispielsweise um Gestellmagazine, handelt.

Erfindungsgemäß ist diese Aufgabe durch eine Werkzeugmaschine mit den Merkmalen des Anspruches 1 gelöst.

Dadurch, daß bei der Erfindung die Werkzeughalterung im Werkzeugtransportwagen einen Sitz für die Aufnahme einer den Schaft des Werkzeuges umgebenden Schutzhülse bildet und der Sitz mit einer steuerbaren Verrastungseinrichtun für die Schutzhülse versehen ist, ist die Möglichkeit eröffnet, den Vorgang des Werkzeugwechsels in Kombination mit dem Vorgang des Abnehmens und Aufsetzens einer Schutzhülse vom Schaft bzw. auf den Schaft des vom Werkzeugtransportwagen jeweils transportierten Werkzeuges zu kombinieren.

Bei Verwendung einer vom Schaft durch eine Axialbewegung abstreifbaren Schutzhülse wird die Verrastungseinrichtung des Sitzes für die Schutzhülse in den die Schutzhülse im Sitz formschlüssig verriegelnden Sperrzustand gesteuert, wenn sich der Werkzeugtransportwagen in der Übergabeposition befindet und der Werkzeugwechselgreifer das in die Übergabeposition verbrachte Werkzeug aus der Werkzeughalterung des Werkzeugtransportwagens herauszieht. Durch den Sperrzustand der Verrastungseinrichtung bleibt bei diesem Vorgang die Schutzhülse in ihrem Sitz in der Werkzeughalterung des Werkzeugtransportwagens zurück. Wenn vom Werkzeugwechselgreifer nunmehr das aus der Werkzeugaufnahme an der Maschinenspindel entnommene, zuvor gebrauchte Werkzeug in die Werkzeughalterung des Werkzeugtransportwagens eingesteckt wird, wird der Schaft dieses Werkzeuges in die im Sitz befindliche Schutzhülse hineinbewegt. Dieses Werkzeug wird sodann zusammen mit der Schutzhülse in die betreffende Ablageposition des Magazins verbracht. Nach Überführen der Verrastungseinrichtung in ihren normalen Verrastungszustand, in dem sie die Schutzhülse im Sitz des Werkzeugtransportwagens nicht mehr formschlüssig, sondern lediglich kraftschlüssig sichert, kann nunmehr der Werkzeugtransportwagen in bei derartigen Werkzeugwechselvorrichtungen üblicher Weise von dem im Magazin abgelegten Werkzeug zurückgezogen werden, wobei es zum Ausrasten des Rasteingriffs mit der Schutzhülse kommt, sodaß diese zusammen mit dem abgelegten Werkzeug im Magazin verbleibt.

Dadurch, daß die Werkzeuge im Magazin mit auf den Schaft aufgesteckter Schutzhülse gelagert sind, ist eine Beeinträchtigung der wichtigen Paßflächen des Werkzeugschaftes durch Umgebungseinflüsse vermieden, selbst bei längerer Verweildauer der Werkzeuge im Magazin und selbst bei offener, d.h. ungeschützter Bauweise des betreffenden Magazins.

Bei einem vorteilhaften Ausführungsbeispiel ist die Verrastungseinrichtung durch ein Steuerglied in den Sperrzustand umsteuerbar, das auf die Verrastungseinrichtung in Abhängigkeit vom Erreichen der Übergabeposition des Werkzeugtransportwagens einwirkt.

Bei dem Steuerglied kann es sich um einen Blockieranschlag handeln, der bei in der Übergabeposition befindlichem Werkzeugtransportwagen an einem beweglichen Rastkörper der Verrastungseinrichtung anliegt und eine Ausrastbewegung des Rastkörpers durch Formschluß blockiert. Beim Herausbewegen des Werkzeugtransportwagens aus der Übergabeposition kommt der Blockieranschlag außer Berührung mit dem Rastkörper, sodaß die Verrastungseinrichtung nunmehr in dem normalen Verrastungszustand ist, in dem die Schutzhülse lediglich kraftschlüssig im Sitz gehalten ist, sodaß beim Ablegen des Werkzeugs im Magazin die Verrastung zwischen Schutzhülse und Sitz im Werktransportwagen gelöst wird und die Schutzhülse zusammen mit dem betreffenden Werkzeug im Magazin verbleibt, wenn der Werkzeugtransportwagen vom Werkzeug zurückgezogen wird.

Verzugsweise weist die Werkzeug-Schutzhülse, welche für die Verwendung bei einer erfindungsgemäßer Werkzeugmaschine vorgesehen ist, die Merkmale des Anspruches 4 auf.

Eine derartige Schutzhülse kann an einen Steilkegelschaft nach DIN 69861 angepaßt sein.

Vorzugsweise weist die Schutzhülse mindestens eine radial (bezogen auf die Achse des Werkzeugschaftes) nach auswärts vorspringende Gestaltsunregelmäßigkeit, beispielsweise in Form eines zungenartigen Ansatzes am vorderen Öffnungsrand der Schutzhülse auf. Diese vorspringende Gestaltsunregelmäßigkeit oder Zunge kann bei entsprechender Gestaltung eines Aufnahmeschlitzes im Werkzeugmagazin als Rückhaltemittel dienen, das durch formschlüssigen Eingriff mit dem Magazin die Schutzhülse im Magazin festhält, sodaß die Schutzhülse entgegen der Wirkung der Verrastungseinrichtung aus dem Sitz im Werkzeugtransportwagen gezogen wird, wenn dieser nach dem Ablegen des Werkzeuges im Magazin vom Werkzeugschaft zurückgezogen wird.

Die Erfindung ist nachstehend anhand eines in der Zeichnung dargestellten Ausführungsbeispiels im einzelnen erläutert.

Es zeigen:

Fig. 1    eine perspektivisch und stark schematisch vereinfacht gezeichnete Ansicht eines Ausführungsbeispiels der Werkzeugmaschine in Form eines Bearbeitungszentrums mit einem Werkzeug-Gestellmagazin;

Fig. 2    eine abgebrochen und in größerem Maßstab gezeichnete Draufsicht der wesentlichen Teile des in Fig. 1 mit einem strichpunktierten Kreis gekennzeichneten Ausschnitts;

Fig. 3    eine abgebrochen gezeichnete Voransicht eines vertikalen Gestellteils des Gestellmagazins von Fig. 1 und

Fig. 4    einen Schnitt entsprechend der Schnittlinie IV-IV von Fig. 3.

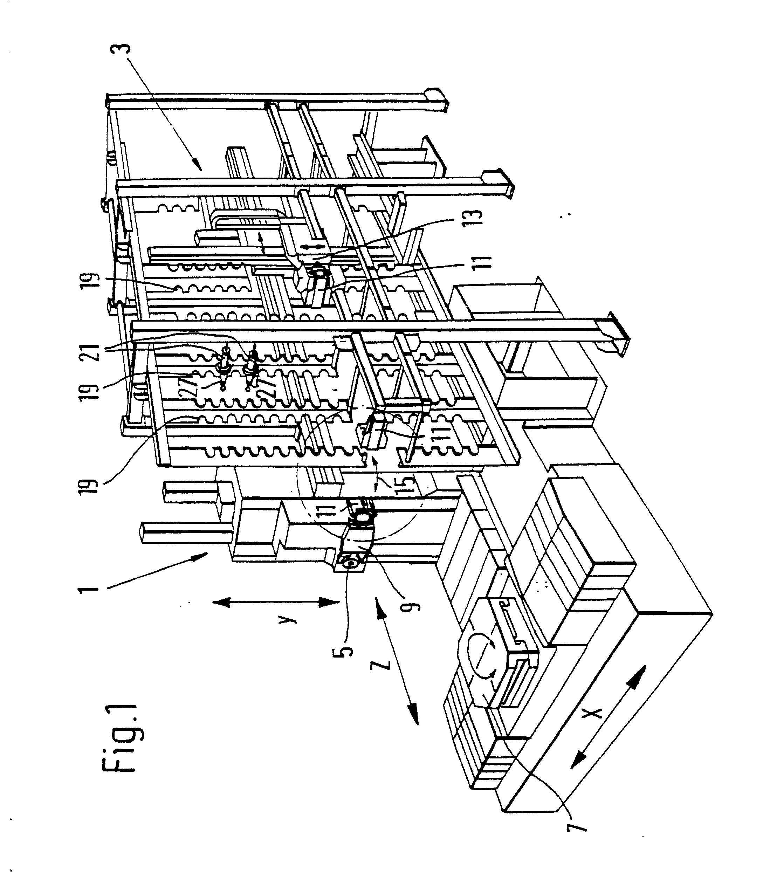

Eine in Fig. 1 dargestellte Werkzeugmaschine in Form eines NC-Bearbeitungszentrums 1 weist ein seitlich neben ihm angeordnetes Gestellmagazin 3 auf. Das Bearbeitungszentrum besitzt eine für eine Drehbewegung antreibbare horizontale Maschinenspindel, die in einem Schlitten eingebaut ist, der durch einen numerisch gesteuerten Stellantrieb zumindest in der vertikalen y-Richtung bewegbar ist. Die Maschinenspindel hat eine Werkzeugaufnahme 5, in der Werkzeuge zum Beispiel mit Steilkegelschaft (DIN 69871) aufnehmbar sind. Der Schlitten bewegt sich in einem Ständer, der durch einen numerisch gesteuerten Stellantrieb in z-Richtung bewegbar ist. Die mittels der Werkzeuge zu bearbeitenden Werkstücke sind auf einem Rundschalttisch 7, gegebenenfalls zusammen mit einer sie tragenden Werkstückpalette, spannbar. Der Rundschalttisch 7 ist in der zur y- und z-Richtung senkrechten x-Richtung mittels eines zugeordneten, numerisch steuerbaren Stellantriebes bewegbar.

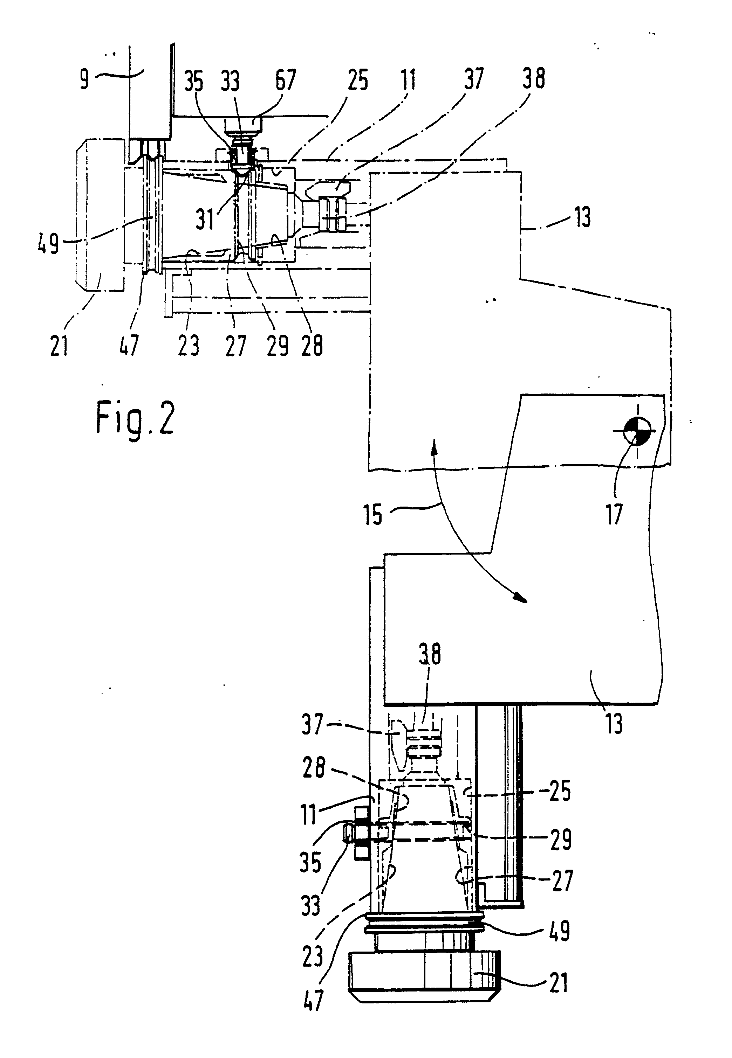

Das Bearbeitungszentrum 1 weist eine automatische Werkzeugwechselvorrichtung auf, zu der ein an der Vorderseite des Spindelstocks angeordneter Werkzeugwechselgreifer in Form eines üblichen Doppelgreifers 9 gehört, der sowohl in der z-Richtung verschiebbar als auch um eine zentrale Achse drehbar am Spindelstock gelagert ist. In bei derartigen Doppelgreifern üblicher Weise ist daher durch Verfahren in z-Richtung gleichzeitig ein ausgebrauchtes Werkzeug aus der Werkzeugaufnahme 5 der Maschinenspindel herausziehbar und ein neues Werkzeug aus einer Werkzeughalterung 11 eines Werkzeugtransportwagens 13 herausnehmbar, wenn sich die Werkzeughalterung 11 desselben in der auf den Doppelgreifer 9 ausgerichteten Übergabeposition befindet. Durch Umwenden des Doppelgreifers 9 um 180° läßt sich das neue Werkzeug auf die Werkzeugaufnahme 5 der Maschinenspindel und das zuvor gebrauchte Werkzeug auf die Werkzeughalterung 11 des Werkzeugtransportwagens 13 ausrichten, sodaß durch ein Zurückbewegen des Doppelgreifers 9 in der z-Richtung das neue Werkzeug in die Werkzeugaufnahme 5 der Maschinenspindel einfahrbar und das zuvor gebrauchte Werkzeug in die Werkzeughalterung 11 des Werkzeugtransportwagens 13 einsteckbar ist. Durch eine in Fig. 1 und 2 mit einem gekrümmten Doppelpfeil 15 angedeutete Schwenkbewegung um 90° wird nunmehr die Werkzeughalterung 11 des Werkzeugtransportwagens um die in Fig. 2 mit 17 bezeichnete Schwenkstelle mit vertikaler Schwenkachse aus der Übergabeposition in die Transportposition geschwenkt, in der das in der Werkzeughalterung 11 befindliche Werkzeug, die zur Ablage im Magazin 3 erforderliche Orientierung hat. Durch Bewegen des Werkzeugtransportwagens 13 in Horizontal- und/oder Vertikalrichtung läßt sich die Werkzeughalterung 11 mit dem in ihr befindlichen Werkzeug nunmehr in der bei derartigen Gestellmagazinen üblichen Art und Weise auf eine gewünschte Ablageposition bringen, um das Werkzeug durch eine gesteuerte Einfahrbewegung, bei der die Werkzeughalterung 11 gleichzeitig sowohl in Vertikal-als auch in Horizontalrichtung bewegt wird, in einen der U-förmigen Werkzeugaufnahmeschlitze 19 des Gestellmagazins einzufahren und das Werkzeug in der Weise abzulegen, wie es in Fig. 1 am Beispiel zweier Werkzeuge 21 gezeigt ist, die im Magazin 3 so gelagert sind, daß der Arbeitsteil der Werkzeuge 21 nach vorn weist und ihr Steilkegelschaft 23 ins Innere des Magazins 3 weist.

Fig. 2 zeigt den der Werkzeughalterung 11 unmittelbar zugeordneten Teil des Werkzeugtransportwagens 13, wobei sich dieser innerhalb des in Fig. 1 mit strichpunktierter Linie eingekreisten Bereiches befindet. In dieser Stellung ist die Werkzeughalterung 11 um die mit 17 bezeichnete Schwenkstelle zwischen der in Fig. 2 mit ausgezogener Linie eingezeichneten Transportstellung und der in Fig. 2 mit strichpunktierter Linie angedeuteten Übergabeposition schwenkbar. In letzterer ist das in der Werkzeughalterung 11 befindliche Werkzeug 21 durch den einen Greiferarm des Doppelgreifers 9 ergreifbar, während der in Fig. 2 nicht gezeigte andere Greiferarm des Doppelgreifers 9 gleichzeitig mit dem in der Werkzeugaufnahme 5 der Maschinenspindel befindlichen Werkzeug zusammenwirkt.

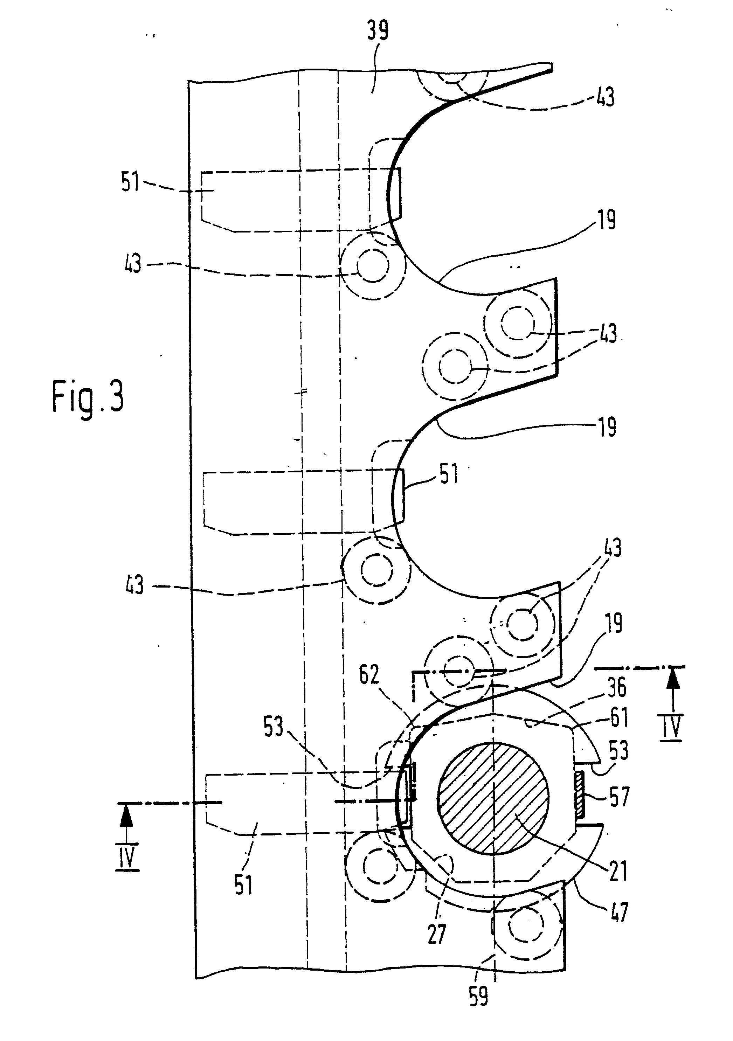

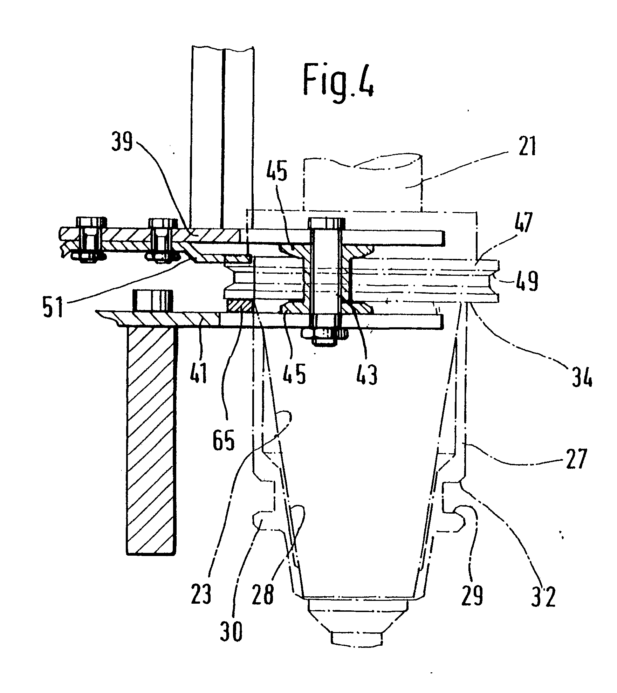

Wie aus Fig. 2 ebenfalls zu ersehen ist, bildet die Werkzeughalterung 11 einen Sitz 25, dessen Innenraum einen größeren Durchmesser besitzt als der Steilkegelschaft 23. Genauer gesagt, ist der Sitz 25 so bemessen, daß er den Steilkegelschaft 23 zusammen mit einer auf diesen aufgesteckten Schutzhülse 27 aufnimmt. Bei der Schutzhülse 27, deren Umriß aus Fig. 4 deutlicher zu ersehen ist, handelt es sich um einen von der verjüngten hinteren Seite her auf den Steilkegelschaft 23 aufsteckbaren Hohlkörper aus Kunststoff, dessen Wandung im hinteren Endbereich 28 an die Kegelform des Steilkegelschaftes 23 angepaßt ist. Noch innerhalb des zum hinteren Endbereich 28 gehörenden Längenabschnitts gelegen, ist an der Außenseite der Schutzhülse 27 eine ringförmige, radial vorspringende Rippe 30 ausgebildet, die zusammen mit einer weiter vorn gelegenen Ringschulter 32 eine umlaufende, in der Außenmantelfläche der Hülse 27 ausgebildete Ringnut 29 definiert. In dem sich an die Ringschulter 32 anschließenden, weiter vorne gelegenen Längenabschnitt ist die Hülse 27 unrund und geht an ihrem vorderen Öffnungsrand 34 in die Form eines Mehrecks über, wobei es sich beim vorliegenden Beispiel um ein Siebeneck handelt. Die Kontur, welche dieses Siebeneck am vorderen Öffnungsrand 34 der Hülse 27 hat, ist in Fig. 3, wo ein in dem untersten Aufnahmeschlitz 19 abgelegtes Werkzeug 21 eingezeichnet ist, mit einer mit 36 bezeichneten, gestrichelten Linie angedeutet.

Die Ringnut 29 ist als Rastvertiefung für die Zusammenwirkung mit einem Schrägflächen 31 aufweisenden Rastkörper 33 vorgesehen, der in der den Sitz 25 bildenden Wandung der Werkzeughalterung 11 für eine Einrast- und Ausrastbewegung in die bzw. aus der Ringnut 29 verschiebbar gelagert und durch eine Rastfeder 35 für den Rasteingriff in die Ringnut 29 vorgespannt ist. Außerdem weist die Werkzeughalterung 11 im inneren Bereich des Sitzes 25 einen steuerbaren Riegelhebel 37 auf, mittels dessen in Zusammenwirkung mit dem inneren Anzugbolzen 38 des Steilkegelschaftes 23 dieser innerhalb des Sitzes 25 verriegelbar ist.

Fig. 3 und 4 zeigen nähere Einzelheiten der vertikalen Gestellbleche des Gestellmagazin 3 mit den an diesen vorgesehenen Aufnahmeschlitzen 19 für die Werkzeuge 21. Wie aus Fig. 4 zu ersehen, sind die Gestellbleche doppelwandig, d.h. aus einem vorderen Blechstreifen 39 und einem hinteren Blechstreifen 41 gebildet, die im Abstand zueinander parallel verlaufen. Die Blechstreifen 39 und 41 sind unter Zwischenfügen von Rundkörpern 43 miteinander verschraubt. Die Rundkörper 43 bilden nicht nur die Abstandhalter zwischen den Blechstreifen 39 und 41, sondern bilden mit ihren seitlichen Flanschrändern 45 seitliche Führungsflächen, welche nach dem Einsetzen eines Werkzeuges 21 in einen betreffenden Aufnahmeschlitz 19 den radial vorspringenden Bund 47 beidseits übergreifen, der am Steilkegelschaft 23 ausgebildet und mit einer vertieften Ringnut in Form einer umlaufenden Trapezrille 49 versehen ist. Wie aus Fig. 4 ebenfalls zu ersehen ist, ist an der Innenseite des Blechstreifens 39 außerdem ein als Verdrehsicherung dienendes Blechstück 51 angeschraubt, das in eine von mehreren Ausnehmungen 53 eingreift, die in dem Bund 47 des Steilkegelschaftes 23 ausgespart sind.

Wie ebenfalls aus Fig. 3 zu ersehen ist, weist die Hülse 27 eine von deren vorderem Öffnungsrand 34 axial nach vorn ragende Nase 57 auf, die bei auf den Steilkegelschaft 23 aufgesteckter Hülse 27 in eine der Ausnehmungen 53 am Bund 47 des Steilkegelschaftes 23 eingreift und dadurch die Drehstellung der Hülse 27 auf dem Steilkegelschaft 23 festlegt. Wie Fig. 3 weiter zeigt, wird dadurch die Drehstellung der Hülse 27 so definiert, daß das mit der gestrichelten Linie 36 gezeigte Siebeneck des Öffnungsrandes 34 der Hülse 27 eine zu einer Symmetrielinie oder -achse 59 symmetrische Lage hat, wobei die Symmetrielinie 59 parallel zur vertikalen Längsachse der Blechstreifen 39, 41 verläuft. Dadurch wird erreicht, daß auf jeden Fall einer von zwei Eckbereichen 61 oder 62, an denen das Siebeneck am Öffnungsrand 34 der Hülse 27 am weitesten radial nach auswärts vorspringt (bezogen auf die Achse des Steilkegelschafts 23), in einer Stellung ist, bei der ein zungenartiger Ansatz 65 den Blechstreifen 41 am Rand des Aufnahmeschlitzes 19 hintergreift, s. Fig. 4. Je ein solcher zungenartiger, seitlich oder radial vorspringender Ansatz 65 ist an jedem der beiden Eckbereiche 61 und 62 vorgesehen. Durch die zur Symmetrielinie 59 symmetrisch ausgerichtete Drehlage der Eckbereiche 61 und 62 ist das Hintergreifen des Blechstreifens 41 durch einen der Ansätze 65 sichergestellt, ungeachtet dessen, ob die Werkzeuge 21 an einem Gestellblech in Aufnahmeschlitzen 19 abgelegt sind, die, wie es Fig. 3 zeigt, nach rechts oben geöffnet sind, oder in Aufnahmeschlitzen, die nach links oben geöffnet sind. Im erstgenannten Fall hintergreift der Ansatz 65 am Eckbereich 62 den Blechstreifen 41, während im zweiten Falle der Ansatz 65 am anderen Eckbereich 61 den Blechstreifen 41 hintergreift.

Bei einem Werkzeugwechsel wird die Werkzeughalterung 11 des Werkzeugtransportwagens 13 auf ein gewünschtes, im Magazin 3 befindliches Werkzeug 21 ausgerichtet. Sodann wird die Werkzeughalterung 11 mit ihrem Sitz 25 von der Rückseite her an das Werkzeug herangefahren, wobei die Schutzhülse 27 des Werkzeugs im Sitz 25 aufgenommen wird und dabei die Verrastung zwischen Sitz 25 und Hülse 27 zustande kommt, sobald der gegen Federkraft bewegliche Rastkörper 33 in die als Rastvertiefung dienende Ringnut 29 der Hülse 27 einrastet. Das Werkzeug 21 selbst wird mit der Werkzeughalterung 11 durch den steuerbaren Riegelhebel 37 verriegelt. Der Werkzeugtransportwagen 13 wird nunmehr im Zuge einer kombinierten Horizontal- und Vertikalbewegung so verfahren, daß das in der Werkzeughalterung 11 befindliche Werkzeug 21 mit der Schutzhülse 27 aus dem Aufnahmeschlitz 19 herausbewegt wird. Diese schräg nach aufwärts verlaufende Bewegung wird durch den den Blechstreifen 41 hintergreifenden Ansatz 65 der Hülse 27 nicht behindert, weil diese Bewegung parallel zur Ebene des Blechstreifens 41 verläuft. Nachdem das Werkzeug 21 mit der Hülse 27 den Aufnahmeschlitz 19 verlassen hat, wird der Werkzeugtransportwagen 13 in die in Fig. 2 mit ausgezogenen Linien eingezeichnete Stellung verfahren. Sodann wird die Werkzeughalterung 11 um die Schwenkstelle 17 in die in Fig. 2 mit strichpunktierter Linie angedeutete Übergabeposition geschwenkt, in der der Doppelgreifer 9 mit seinem einen Greiferarm das Werkzeug 21 am Bund 47 erfaßt. Die Verriegelung des Werkzeugschaftes 23 mittels des Riegelhebels 37 wird nunmehr gelöst. Wie Fig. 2 zeigt, liegt der bewegliche Rastkörper 33 bei in der Übergabeposition befindlicher Werkzeughalterung 11 an einem Anschlagglied 67 an. Dieses wirkt auf die aus dem Rastkörper 33, den Schrägflächen 31 und der Ringnut 29 an der Hülse 27 gebildete Verrastungseinrichtung im Sinne eines Blockiergliedes zusammen, das eine Ausrastbewegung des Rastkörpers 33 aus der Ringnut 29 verhindert. Das Werkzeug 21 kann daher bei gelöstem Riegelhebel 37 nunmehr mittels des Doppelgreifers 9 aus der Werkzeughalterung 11 axial herausgezogen werden, ohne daß die Hülse 27 aus ihrem Sitz 25 mit heraubewegt wird. Es befindet sich daher nach dem Entnehmen des Werkzeuges 21 eine leere Schutzhülse 27 im Sitz 25, in die das zuvor gebrauchte Werkzeug nach erfolgter Schwenkbewegung des Doppelgreifers 9 eingefahren wird.

Nach dem Einfahren des zuvor gebrauchten Werkzeuges in die Schutzhülse 27 wird der Riegelhebel 37 wieder mit dem Anzugbolzen 38 dieses Werkzeuges in Riegeleingriff gebracht, sodann wird die Werkzeughalterung 11 in die in Fig. 2 mit ausgezogener Linie gezeigte Stellung geschwenkt und der Werkzeugtransportwagen 13 in diejenige Position am Magazin 3 gebracht, in der das in der Werkzeughalterung 11 befindliche Werkzeug abgelegt werden soll. Dieses geschieht durch die bereits erwähnte, aus Horizontal- und Vertikalbewegungen kombinierte schräge Einfahrbewegung in einen der Aufnahmeschlitze 19. Durch die Anlage des Blechstreifens 41 an einem der seitlichen Ansätze 65 der Schutzhülse 27 kann nach dem Lösen des Riegelhebels 37 nunmehr die Werkzeughalterung 11 mit dem Sitz 25 ohne die im Aufnahmeschlitz 19 zusammen mit dem Werkzeug 21 zurückbleibende Hülse 27 axial zurückgezogen werden. Dabei kommt es zum Ausrasten des Rastkörpers 33 aus der Ringnut 29 der Hülse 27, weil am Magazin 3 kein die Ausrastbewegung blockierendes Glied, wie es in der Übergabeposition bei dem Anschlagglied 67 der Fall ist, auf den Rastkörper 33 einwirkt, sodaß dieser durch Anlaufen der Schrägflächen 31 an der Rippe 30 gegen die Federkraft eine Ausrastbewegung durchführt und dadurch ermöglicht, daß die Hülse 27 auf dem Steilkegelschaft 23 des abgelegten Werkzeugs zurückbleibt.

Alle in der vorstehenden Beschreibung erwähnten sowie auch die nur allein aus der Zeichnung entnehmbaren Merkmale sind weitere Ausgestaltungen der Erfindung.

**Patentansprüche**

1. Werkzeugmaschine, insbesondere NC-Bearbeitungszentrum, zum spanenden Bearbeiten von Werkstücken mittels Werkzeugen, die durch eine selbsttätig arbeitende Werkzeugwechselvorrichtung wahlweise aus einem Werkzeugmagazin (3), das für die Aufnahme eines Vorrats an Werkzeugen (21) vorgesehen ist, entnehmbar, in eine Werkzeugaufnahme einer einen Drehantrieb aufweisenden Maschinenspindel einsetzbar, aus der Werkzeugaufnahme (5) an der Maschinenspindel herausnehmbar und im Werkzeugmagazin (3) ablegbar sind, mit einem Werkzeugwechselgreifer (9) zum Ausheben und Einsetzen der Werkzeuge aus der bzw. in die Werkzeugaufnahme (5) der Maschinenspindel und aus einer bzw. in eine Werkzeughalterung (11) eines Werkzeugtransportwagens (13), der zwischen einer dem Werkzeugwechselgreifer (9) benachbarten Übergabeposition und ausgewählten Positionen am Werkzeugmagazin (3) bewegbar ist, dadurch gekennzeichnet, daß die Werkzeughalterung (11) im Werkzeugtransportwagen (13) einen Sitz (25) für die Aufnahme einen den Schaft (23) des Werkzeuges (21) umgebenden, vom Schaft (23) durch eine Axialbewegung abstreifbaren Schutzhülse (27) und der Sitz (25) eine mit der in ihm befindlichen Schutzhülse (27) zusammenwirkende steuerbare Verrastungeinrichtung (29, 33) aufweisen, die aus einem die Schutzhülse (27) im Sitz (25) kraftschlüssig sichernden Verrastungszustand in einen die Schutzhülse (27) im Sitz (25) formschlüssig verriegelnden Sperrzustand umsteuerbar ist.

2. Werkzeugmaschine nach Anspruch 1, dadurch gekennzeichnet, daß die Verrastungseinrichtung (29, 33) durch ein in der Übergabeposition des Werkzeugtransportwagens (13) auf sie einwirkendes Steuerglied in den Sperrzustand umsteuerbar ist.

3. Werkzeugmaschine nach Anspruch 2, dadurch gekennzeichnet, daß die Verrastungseinrichtung bei Verwendung einer Schutzhülse (27), die an ihrer Außenseite eine Rastvertiefung (29) aufweist, einen in der Wand des Sitzes (25) im Transportwagen (13) beweglich gelagerten, für den Rasteingriff in die Rastvertiefung (29) unter Federkraft (35) stehenden Rastkörper (33) aufweist, daß an diesem und/oder an der Rastvertiefung eine Schrägfläche (31) vorhanden ist, die bei in Verrastungsstellung befindlicher Verrastungseinrichtung eine gegen die Federkraft (35) erfolgende Ausrastbewegung beim Herausbewegen der Schutzhülse (27) aus dem Sitz (25) erzeugt, und daß als Steuerglied ein bei in der Übergabeposition befindlichem Werkzeugtransportwagen (13) am Rastkörper (33) anliegender und dessen Ausrastbewegung blockierender Anschlag (67) vorgesehen ist.

4. Werkzeugmaschine nach einem der Ansprüche 1 bis 3, wobei die Schutzhülse als in Axialrichtung auf den Werkzeugschaft (23) aufschiebbare, die äußere Mantelfläche des Schaftes (23) zumindest teilweise überdeckender Hohlkörper aus einem Kunststoffwerkstoff gebildet ist, an dessen Außenfläche eine Rastvertiefung für den Rasteingriff eines Rastkörpers (33) ausgebildet ist.

5. Werkzeugmaschine nach Anspruch 4, dadurch gekennzeichnet, daß sie an einen Werkzeugschaft in Form eines Steilkegelschaftes (23) oder -adapters für automtischen Werkzeugwechsel (DIN 69861) angepaßt ist und einen die Steilkegel-Mantelfläche umgebenden, an beiden Enden offenen Köcherteil aufweist, dessen Öffnungsrand (34) an der größeren Öffnung für die Anlage an einem radial nach auswärts vorspringenden, ringförmigen Bund (47) vorgesehen ist, in dem eine ringnutartige Vertiefung, vorzugsweise in Form einer Trapezrille (49), ausgebildet ist, und daß an diesem Öffnungsrand (34) mindestens eine axial vorspringende Nase (57) ausgebildet ist, die für den Eingriff in eine den Bund (47) bereichsweise unterbrechende Ausnehmumg (53) vorgesehen ist.

6. Werkzeugmaschine nach Anspruch 5, dadurch gekennzeichnet, daß der Köcherteil zumindest in dem Bereich des größeren Öffnungsrandes (34) eine unrunde Gestalt mit zumindest einem sich vom Öffnungsrand (34) radial nach auswärts erstreckenden zungenartigen Ansatz (61, 62, 65) besitzt.

7. Werkzeugmaschine nach Anspruch 6, dadurch gekennzeichnet, daß zwei zueinander achssymmetrisch gelegene zungenartige Ansätze (61, 62, 65) vorhanden sind.

8. Werkzeugmaschine nach einem der Ansprüche 5 bis 7, dadurch gekennzeichnet, daß die Rastvertiefung in Form einer in der Außenmantelfläche des Köcherteils ausgebildeten umlaufenden Ringnut (29) ausgebildet ist.

**Claims**

1. Machine tool, in particular NC-machining centre, for machining work pieces in a cutting manner by means of tools, which may be removed by means of an automatically operating tool changing device optionally from a tool magazine (3) which is provided for receiving a supply of tools (21), be inserted in a tool receiver of a machine spindle which comprises a rotary drive and be removed from the tool receiver (5) of the machine spindle and placed into the tool magazine (3), with a tool changing gripper (9) for lifting and inserting the tools from and into the tool receiver (5) of the machine spindle, respectively, and from one and into one tool holding means (11), respectively, of a tool transporting carriage (13) which may be moved between a delivery position which is next to the tool changing gripper (9) and selected positions at the tool magazine (3), characterised in that the tool holding means (11) in the tool transporting carriage (13) comprises a seat (25) for receiving a protecting sleeve (27) which covers the shank (23) of the tool (21) and can be removed by an axial displacement and the seat (25) comprises a controllable locking device (29, 33) which cooperates with the protecting sleeve (27) which is located in the seat (25), wherein the locking device (29, 33) can be adjusted from a locking position in which the protecting sleeve (27) is secured in the seat (25) in a non-positive locking manner into a locking position in which the protecting sleeve (27) is locked in the seat (25) in a positive-locking manner.

2. Machine tool according to claim 1, characterised in that the locking device (29, 33) may be adjusted to the locking position by means of a control member which acts upon it in the delivery position of the tool transporting carriage (13).

3. Machine tool according to claim 2, characterised in that, when a protecting sleeve (27) which is provided on its outer surface with a retaining recess (29) is used, the locking device comprises a retaining body (33) which is displaceably disposed in the wall of the seat (25) in the transporting carriage (13) and is under the pressure (35) of a spring for retaining engagement in the retaining recess (29), the retaining body (33) and/or the retaining recess is provided with an inclined surface (31) which, when the locking device is in its locking position, generates an unlocking movement against the spring force (35) when the protecting sleeve (27) is lifted from the seat (25) and a stop (67) is provided as control member which, when the tool transporting carriage (13) is in its delivering position, abuts the retaining body (33) and blocks its unlocking movement.

4. Machine tool according to any one of claims 1 to 3, wherein the protecting sleeve is formed as hollow body of synthetic material which can be pushed over the tool shank (23) in the axial direction and covers at least partly the outer generated surface of the shank (23), wherein at the outer surface of the hollow body there is formed a retaining recess for the retaining engagement of a retaining body (33).

5. Machine tool according to claim 4, characterised in that it is adapted to a tool shank in the form of a taper shank (23) or taper adaptor for automatic tool change (DIN 69861) and comprises a quiver-like part which covers the tapering generated surface and is open at both ends and of which the opening edge (34) at its larger opening is arranged for abutment against an annular collar (47) which projects radially outwards and in which there is formed a recess similar to an annular groove, preferably in the form of a trapezoidal groove (49), wherein on this opening edge (34) there is formed at least one axially projecting nose (57) which is provided for the engagement in a recess (53) which interrupts parts of the collar (47).

6.  Machine tool according to claim 5, characterised in that the quiver-like part has a shape which is not circular at least in the area of the larger opening edge (34) with at least one tongue-like attachment (61, 62, 65) which extends from the opening edge (34) radially outwards.

7.  Machine tool according to claim 6, characterised in that two tongue-like attachments (61, 62, 65) are provided which are disposed in an axially symmetric manner with respect to one another.

8.  Machine tool according to any one of claims 5 to 7, characterised in that the retaining recess is formed as a continuous annular groove (29) which is formed in the outer surface of the quiver-like part.

**Revendications**

1.  Machine-outil, notamment centre d'usinage à commande numérique destinée à usiner des pièces par enlèvement de copeaux à l'aide d'outils qui, sous l'action d'un dispositif de changement d'outil travaillant automatiquement, peuvent être prélevés dans un magasin d'outil (3) qui est prévu pour contenir une réserve d'outils (21), être mis en place dans un logement d'outil d'une broche de la machine qui est équipée d'un entraînement en rotation, être prélevés dans le logement d'outil (5) porté par la broche de la machine et être déposés dans le magasin d'outils (3), ce dispositif comprenant une pince de changement d'outil (9) servant à prélever les outils dans le logement d'outil (5) de la broche de la machine et dans une monture d'outil (11) d'un chariot de transport d'outil (13) qui peut se déplacer entre une position de transfert, voisine de la pince de changement d'outil (9) et dans une position sélectionnée du magasin d'outils (3), ou pour mettre les outils en place dans ledit logement d'outil et dans ladite monture d'outil, caractérisée en ce qu'une monture d'outil (11) portée par le chariot de transport d'outil (l3) présente un logement (25) destiné à recevoir un manchon protecteur (27) qui entoure la queue (23) de l'outil (21) et qui peut être détaché de la queue (23) par un mouvement axial, et le logement (25) présente un dispositif de verrouillage commandé (29, 33) qui coopère avec le manchon protecteur (27) qui s'y trouve, dispositif de verrouillage qui peut être inversé d'un état de verrouillage qui fixe le manchon protecteur (27) dans le logement (25) par action de force, dans un état de blocage qui verrouille le manchon protecteur (27) par une liaison opérant par sûreté de forme dans le logement (25).

2.  Machine-outil selon la revendication 1, caractérisée en ce que le dispositif de verrouillage (29, 33) peut être inversé dans l'état de blocage par un organe de commande qui agit sur ce dispositif dans la position de transfert du chariot de transport d'outil (13).

3.  Machine-outil selon la revendication 2, caractérisée en ce que, dans le cas où l'on utilise un manchon protecteur (27) qui présente un évidement d'arrêt (29) sur sa surface supérieure, le dispositif de verrouillage présente un corps d'arrêt (33) monté mobile dans la paroi du logement (25) du chariot de transport (13), et qui est soumis à la force d'un ressort (35) pour s'engager dans l'évidement d'arrêt (29), en ce que, sur ce corps et/ou sur l'évidement d'arrêt, est prévue une surface inclinée (31) qui, lorsque le dispositif de verrouillage se trouve dans la position de verrouillage, provoque un mouvement de dégagement, qui se produit à l'encontre de la force élastique (35), lorsqu'on extrait le manchon protecteur (27) du logement (25), et en ce qu'il est prévu, comme organe de commande, une butée (67) qui est en appui contre le corps d'arrêt (33) lorsque le chariot de transport d'outil (13) se trouve dans la position de transfert, et qui bloque le mouvement de dégagement de ce corps.

4.  Machine-outil selon une des revendications 1 à 3, dans laquelle le manchon protecteur est constitué par un corps creux fait d'une matière synthétique, qui peut être emmanché sur la queue (23) de l'outil dans la direction axiale et qui recouvre au moins partiellement la surface latérale extérieure de la queue (23), et sur la surface extérieure de laquelle est formé un évidement de verrouillage destiné à la prise d'un corps de verrouillage (33).

5. Machine-outil selon la revendication 4, caractérisée en ce qu'elle est adaptée à une queue d'outil présentant la forme d'une queue conique à forte pente (23) ou d'un adaptateur de queue conique pour le changement automatique des outils (DIN 69861), et présente un carquois ouvert à ses deux extrémités, qui entoure la surface latérale du cône à forte pente, et dont le bord d'ouverture (34) est prévu pour s'appuyer contre un collet annulaire (47) qui fait saillie radialement vers l'extérieur, collet dans lequel est formé un évidement en forme de gorge annulaire, de préférence sous la forme d'une gorge trapézoïdale (49) et en ce que, au niveau de ce bord d'ouverture (34) est formé au moins un bec (57) qui fait saillie dans la direction axiale, et qui est prévu pour l'engagement dans un évidement (53) qui interrompt le collet (47) par endroits.

6. Machine-outil selon la revendication 5, caractérisée en ce que le carquois possède, du moins dans la région du grand bord d'ouverture (34), une forme non circulaire comportant au moins une protubérance en forme de languette (61, 62, 65) qui s'étend radialement vers l'extérieur en partant du bord d'ouverture (34).

7. Machine-outil selon la revendication 6, caractérisée en ce qu'il est prévu deux protubérances en forme de languette (61, 62, 65) disposées asymétriquement l'une par rapport à l'autre.

8. Machine-outil selon une des revendications 1 à 7, caractérisée en ce que l'évidement de verrouillage présente la forme d'une gorge annulaire circonférentielle (29) formée dans la paroi latérale extérieure du carquois.

Fig.1

Fig.2

**Fig.3**

Fig.4

EP 0 319 611 B1